# EUROPÄISCHE PATENTSCHRIFT

(11) **EP 0 549 817 B1**
(45) Veröffentlichungstag und Bekanntmachung des Hinweises auf die Patenterteilung: **29.09.1993**
(21) Anmeldenummer: 91120253.9
(22) Anmeldetag: 27.11.1991
(51) Int. Cl.: F16H 1/16, E05F 15/16

(54) **Verstellantrieb, insbesondere Kraftfahrzeug-Stellantrieb**
Adjusting drive, especially a motor vehicle adjusting drive
Commande de déplacement, en particulier commande de déplacement pour véhicule à moteur

(43) Veröffentlichungstag der Anmeldung: 07.07.1993
(73) Patentinhaber: SIEMENS AKTIENGESELLSCHAFT, 80333 München (DE)
(72) Erfinder: Michel, Peter, Dipl.-Ing. (FH), W-8702 Kleinrinderfeld (DE); Müller, Karlheinz, Dipl.-Ing. (FH), W-8700 Würzburg (DE)

(56) Entgegenhaltungen:
- DE-A- 3 133 652
- DE-A- 3 434 093
- DE-A- 3 611 568
- DE-U- 8 903 714
- FR-A- 1 051 336
- FR-A- 2 444 778
- FR-A- 2 532 983
- US-A- 3 455 174

## Beschreibung

Die Erfindung bezieht sich auf einen Verstellantrieb, insbesondere Kraftfahrzeug-Stellantrieb gemäß Anspruch 1 bzw.2.

Bei einem durch die DE-U-89 03 714.6 bekannten Verstellantrieb für einen Kraftfahrzeug-Fensterheberantrieb sind sowohl das Getrieberad als auch der abtriebsseitig mit einem Außenritzel versehene Mitnehmer mit einem axialen, aus dem Getriebegehäusedeckel nach außen ragenden Wellenbund auf einem axial vorstehendem, einstückig an den Boden des Getriebegehäuses angeformten Achsbolzen drehbar gelagert; der Mitnehmer ist sowohl nach radial außen gegenüber dem Getriebegehäusedeckel als auch nach radial innen gegenüber dem Achsbolzen durch je eine dynamische Dichtung in Form eines formschlüssig gehaltenen diskreten O-Ringes abgedichtet.

Durch die DE-C-36 11 568 ist ein Verstellantrieb, insbesondere Sitz-Verstellantrieb, in einem Kraftfahrzeug bekannt, bei dem ein massiv mit dem Schneckenrad einstückig verbundener Mitnehmer axial beidseitig über gesonderte Lageraufnahmen in Gehäusewandungen des Getriebegehäuses gelagert ist; zur Ankopplung eines Abtriebsritzel ist dieses als gesondertes Bauteil mit einer Außenzahnung in eine korrespondierende Innenzahnung am Umfang einer axial durchgehenden Bohrung des Mitnehmers eingesteckt.

Durch die DE-A-31 33 652 ist ein Fensterheber-Verstellantrieb mit einem dargestellten einteiligen Gehäuse bekannt, bei dem eine Abtriebswelle mit einem aus dem einen Boden des Gehäuses ragenden Abtriebselement in diesem Boden gelagert ist; auf der Abtriebswelle ist ein konzentrisch umgebender, mit einem Getrieberad im Preßsitz verbundener Ansatz frei drehbar gelagert, der seinerseits in dem anderen Boden des umgebenden Gehäuses drehbar gelagert ist. Bei motorischem Antrieb des Schneckenrades wird eine Drehmitnahme zwischen dem Ansatz und der Abtriebswelle durch ein einmontierbares Kupplungsstück sichergestellt, das für eine manuelle Notbetätigung entfernbar ist und dann unter Außenkraftsetzung des Getriebes eine Drehbetätigung der Abtriebswelle relativ zu dem Ansatz ermöglicht.

Durch die FR-A-2 532 983 ist ein Fensterheber-Verstellantrieb mit einem topfförmigen Getriebegehäuse und einem dieses verschließenden Getriebegehäusedeckel bekannt. Ein über gesonderte Dämpfungselemente mit einem Getrieberad in Mitnahmeverbindung stehender Mitnehmer ist axial beidseitig unmittelbar sowohl im Getriebegehäuse als auch im Getriebegehäusedeckel gelagert; in eine Wellenöffnung des Mitnehmers ist eine Abtriebswelle gesteckt, die mit einem Abtriebselement aus dem Boden des Getriebegehäuses ragt. Auch hier kann wieder für eine manuelle Notbetätigung die Abtriebswelle unter Außerkraftsetzung des Getriebes relativ zu diesem frei drehbar sein.

Der konstruktive und montagetechnische Aufwand für einen Verstellantrieb der eingangs genannten Art kann bei gleichzeitig voll gewährleisteter Abdichtung des Getriebegehäuses gegen Feuchtigkeitseintritt erfindungsgemäß durch die Lehre des Anspruchs 1 bzw.2 wesentlich vermindert werden; die Gegenstände der Unteransprüche kennzeichnen vorteilhafte Ausgestaltungen dieser Lehre.

Da der Mitnehmer bei dem erfindungsgemäßen Verstellantrieb als rotierender Teil selbst Lagerfunktionen und zumindest teilweise auch direkt gegenüber dem Getriebegehäuse bzw. Getriebegehäusedeckel übernimmt, kann auf gesonderte Achsen und gegebenenfalls Lager zur drehbaren Lagerung der von der Achse aufzunehmenden weiteren Antriebs- bzw. Abtriebsteile und auf eine dynamische Dichtung zwischen dem Mitnehmer und einem im Getriebegehäuse angeformten Achsbolzen verzichtet werden.

Der konstruktive und montagetechnische Aufwand läßt sich dadurch noch weiter mindern, daß das Getrieberad einstückiger Bestandteil des Mitnehmers ist, wobei auf eine tangentiale Anschlagdämpfung zwischen dem Getrieberad und dem Mitnehmer dann nicht verzichtet werden muß, wenn nach einer Ausgestaltung der Erfindung der Mitnehmer über federstegartige Speichen im Sinne einer tangentialen Anschlagdämpfung mit dem Getrieberad in Mitnahmeverbindung steht.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: einen axialen Längsschnitt durch einen Kraftfahrzeug-Fensterheberantrieb bzw. Kraftfahrzeug-Schiebedachantrieb mit einem Kommutator-Elektromotor und einem daran angeflanschten Getriebe
- FIG 2: den Antrieb gemäß FIG 1 im Schnittverlauf II-II
- FIG 3: eine zweite Alternativausführung zu FIG 2
- FIG 4: eine axiale Stirnansicht des Getriebegehäusedeckels mit daran anvulkanisiertem ersten und zweiten Dichtrand
- FIG 5: die Ausführung gemäß FIG 5 im Schnittverlauf VI-VI
- FIG 6: einen Detailausschnitt aus FIG 6 mit vergrößerter Darstellung des zweiten Dichtrandes.

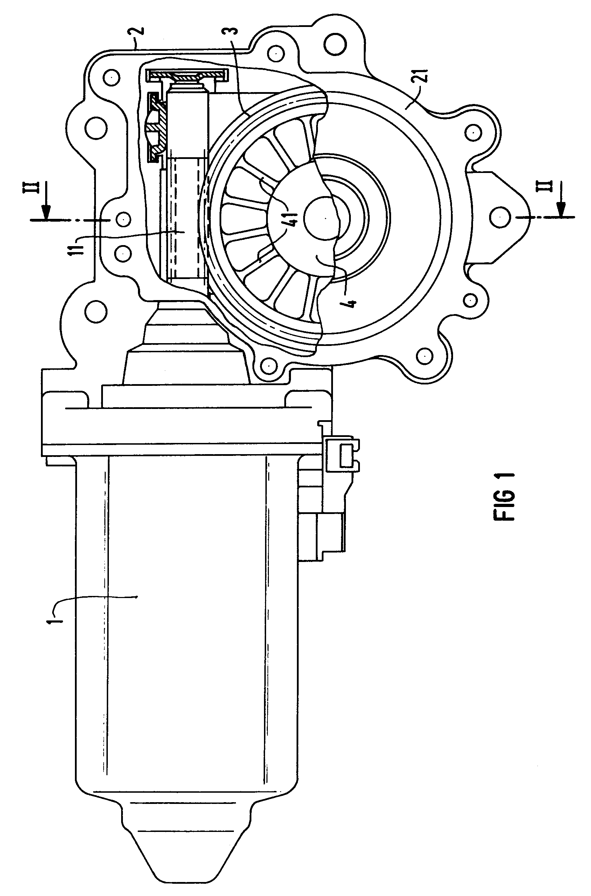

Fig 1 zeigt in einem axialen Längsschnitt den Prinzipaufbau eines elektromotorischen Kraftfahrzeug-Stellantriebes, der z.B. für einen Fensterheberantrieb bzw. einen Schiebedachantrieb in einem Kraftfahrzeug einsetzbar ist. An die rechte Stirnseite des nur mit seinem Motorgehäuse 1 schematisch angedeuteten Kommutatormotors ist ein Getriebegehäuse 2 angeflanscht, in das die Rotorwelle des Kommutatormotors als Schneckenwelle 11 hineinragt und mit einem in dem Getriebegehäuse 2 drehbar gelagerten Getrieberad 3 kämmt.

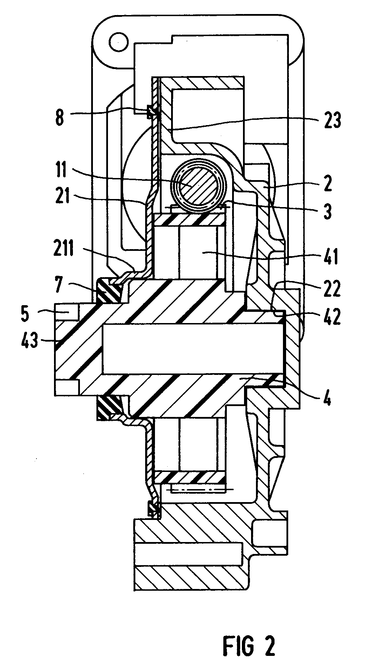

Wie insbesondere aus der Zusammenschau mit der Schnittdarstellung gemäß FIG 2, ersichtlich ist der radial äußere Getriebekranz des Getrieberades 3 über federstegartige Speichen 41 als einstückiges Spritzgußteil mit einem Mitnehmer 4 ausgebildet, der mit einem ersten Lagerbereich 42 direkt in einer korrespondierenden Lageraufnahme 22 des Getriebegehäuses 2 und mit einem linken zweiten Lagerbereich 43 direkt in einer korrespondierenden Lageraufnahme 221 des Getriebegehäusedeckels 21 drehbar gelagert ist und durch eine Mittelöffnung des getriebegehäusedeckels 21 mit einem Ende herausragt, das ein Ritzel 5 als äußeres Antriebselement zur Ankopplung einer Betätigung für die Bewegung eines Kraftfahrzeugfensters bzw. eines Kraftfahrzeugschiebedaches aufnimmt. Ebenso wie die federstegartigen Speichen 41 ist auch das Ritzel 5 einstückiger Bestandteil des Mitnehmers 4, der zweckmäßgerweise aus einem gute Lagerfunktionen übernehmenden Material, insbesondere aus einem entsprechenden Kunststoff oder einem, gegebenenfalls ölgetränkten, Sintermaterial besteht.

Anstelle der hier gezeigten einstückigen Verbindung zwischen dem Getrieberad 3 einerseits und dem Mitnehmer 4 andererseits durch die federstegartigen Speichen 41 kann im Rahmen vorliegender Erfindung auch eine Mitnahmeverbindung derart vorgesehen sein, daß radiale Mitnahmestege eines der beiden Elemente zwischen tangential übergreifende Mitnahmegabeln des anderen Elementes reichen, wobei entweder die Mitnahmestege und/oder die Mitnahmegabeln im Sinne einer tangentialen Anschlagdämpfung elastisch ausgebildetet sein können.

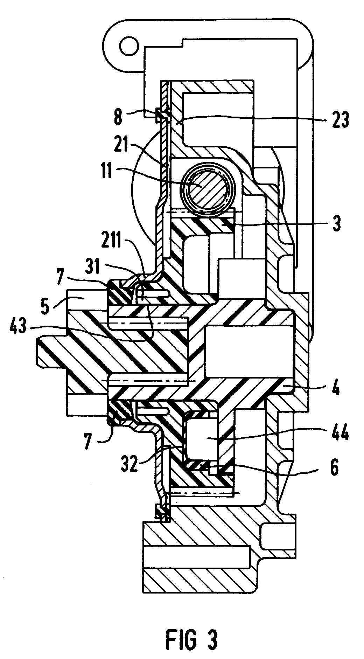

FIG 3 zeigt einen über eine gesonderte Dämpfungszwischenlage 6 in Drehmitnahme mit dem Getrieberad 3 stehenden getrennten Mitnehmer 4. Dazu greifen axial vorstehende Mitnahmenocken 44 des Mitnehmers 4 in korrespondierende, über den Umfang des Getrieberades 3 vorgesehene Mitnahmetaschen 32, wobei zwischen den Mitnahmenocken 44 einerseits und den Mitnahmetaschen 32 andererseits ein Dämpfungselement 6, insbesondere in Form einer Gummischeibe zwischengelegt, ist. Der Mitnehmer 4 ist wiederum mit seinem rechten ersten Lagerbereich 42 in der korrespondierenden Lageraufnahme 22 des Getriebegehäuses 2 unmittelbar gelagert und mit seinem linken zweiten Lagerbereich 43 mittelbar über eine an das Getrieberad 3 axial angeformte Lagerhülse 31 in der zweiten Lageraufnahme 221 des Getriebegehäusedeckels 21 drehbar gelagert. Das als Abtriebselement vorgesehene Ritzel 5 ist in diesem Fall als gesondertes Element in formschlüssiger Drehmitnahme zum Mitnehmer 4 von der linken Seite her in eine Aufnahmeöffnung des Mitnehmers 4 eingesteckt. Zur axialen Lagesicherung liegt das Getrieberad (3) einerseits an einem Absatz des Mitnehmers (4) und andererseits am Getriebegehäusedeckel (21) an.

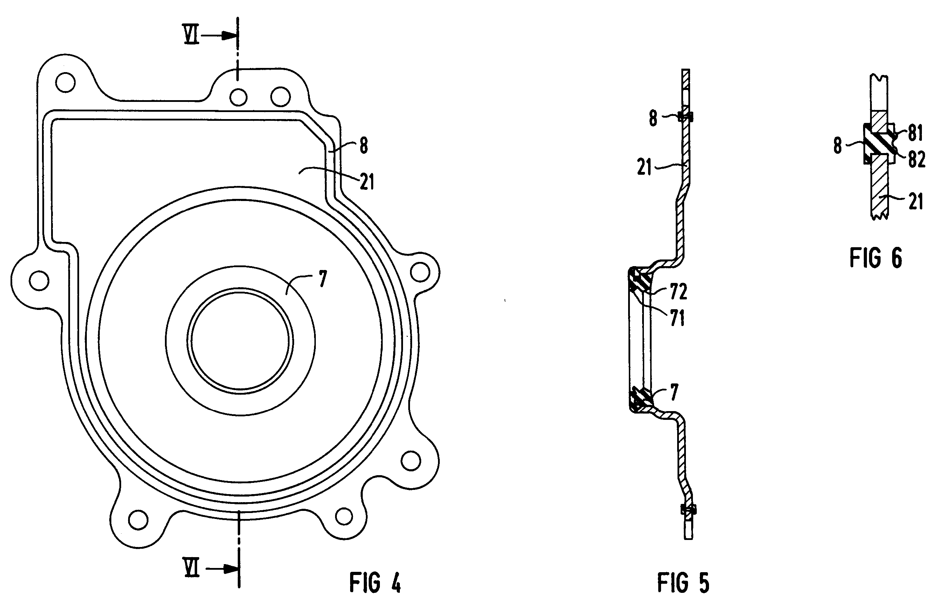

Zur feuchtigkeitsdichten Abdichtung zwischen dem Getriebegehäuse 2 und dem Getriebegehäusedeckel 21 ist bei dem erfindungsgemäßen Verstellantrieb lediglich ein erster, radial innerer erster Dichtrand 7 als dynamische Dichtung im Bereich der Mittelöffnung des Getriebegehäusedeckels 21 sowie ein radial äußerer, zweiter Dichtrand 8 als statische Dichtung im Dichtungsbereich 23 der gegenseitigen Anlage von Getriebegehäuse 2 und Getriebegehäusedeckel 21 notwendig. Beide Dichtränder 7;8 sind auf bzw. an den Getriebegehäusedeckel 21 anvulkanisiert und durch Eindringen in über den Umfang des Getriebehäusedeckels 21 im Bereich der Dichtränder 7;8 angeordneter Durchbrüche zusätzlich - wie insbesondere aus der vergrößerten Darstellung gemäß FIG 6 ersichtlich - verankert.

Der erste Dichtrand 7 drückt mit, vorzugsweise in gegenseitiger Spreizstellung angeordneten, Dichtlippen 71;72 gegen den Mitnehmer 4 an; der zweite Dichtrand 8 weist gegen das Getriebegehäuse 2 bei Verschluß durch den Getriebegehäusedeckel 21 gepreßte Dichtlippen 81;82 auf.

## Patentansprüche

1. Verstellantrieb, insbesondere Kraftfahrzeug-Stellantrieb, mit den Merkmalen:
(a) In einem durch einen Getriebegehäusedeckel (21) verschließbaren Getriebegehäuse (2) ist ein Getrieberad (3) drehbar gelagert,
(b) das Getrieberad (3) steht über einen gleichzeitig als Antriebswelle ausgebildeten Mitnehmer (4) mit einem auf der Seite des Getriebegehäusedeckels (21) ausgangsseitigen Abtriebselement (Ritzel 5) in Antriebsverbindung;
(c) zwischen dem Getrieberad (3) und dem Mitnehmer (4) ist ein zumindest tangential elastisches Dämpfungselement vorgesehen;
(d) das Getrieberad (3) bzw. der Mitnehmer (4) sind als getrennte Bauteile ausgebildet und über ein gesondertes Dämpfungselement (6) in tangential anschlaggedämpfte gegenseitige Drehmitnahme gestellt;
(e) der Mitnehmer (4) ist mit einem ersten Lagerbereich (42) unmittelbar in dem Getriebegehäuse (2) und mit einem zweiten, gegenüber dem Getriebegehäusedeckel (21) abgedichteten Lagerbereich (43) mittelbar über eine konzentrische Lagerhülse (31) des Getrieberades (3) in dem Getriebegehäusedeckel (21) drehbar gelagert.

2. Verstellantrieb, insbesondere Kraftfahrzeug-Stellantrieb mit den Merkmalen:
a) In einem durch einen Getriebegehäusedeckel (21) verschließbaren Getriebegehäuse (2) ist ein Getrieberad (3) drehbar gelagert,
b) das Getrieberad (3) steht über einen gleichzeitig als Antriebswelle ausgebildeten Mitnehmer (4) mit einem auf der Seite des Getriebegehäusedeckels (21) ausgangsseitigen Abtriebselement (Ritzel 5) in Antriebsverbindung;
c) zwischen dem Getrieberad (3) und dem Mitnehmer (4) ist ein zumindest tangential elastisches Dämpfungselement vorgesehen;
f) das Getrieberad (3) und der Mitnehmer (4) sind einstückig über federstegartige Speichen (41) verbunden und in tangential anschlagdämpfende gegenseitige Drehmitnahme gestellt;
g) der Mitnehmer (4) ist mit jeweils einem ersten Lagerbereich (42) unmittelbar in dem Getriebegehäuse (2) bzw. mit einem zweiten, gegenüber dem Getriebegehäusedeckel (21) abgedichteten Lagerbereich (43) unmittelbar in dem Getriebegehäusedeckel (21) drehbar gelagert.

3. Verstellantrieb nach Anspruch 1 mit dem Merkmal:
h) das Getrieberad (3) ist getriebegehäuseseitig durch Anlage an einen Absatz des Mitnehmers (4) und getriebegehäusedeckelseitig durch Anlage an den Getriebegehäusedeckel (21) axial lagegesichert.

4. Verstellantrieb nach einem der Ansprüche 1-3 mit dem Merkmal:
i) Das Abtriebselement (Ritzel 5) ist einstückiger Bestandteil des Mitnehmers (4).

5. Verstellantrieb nach einem der Ansprüche 1-4 mit dem Merkmal:
j) Der Mitnehmer (4) besteht aus einem lagerfunktionstüchtigen Material, insbesondere einem POM-Kunststoff (Polyoximethylen bzw. Polyacetal).

6. Verstellantrieb nach einem der Ansprüche 1-6 mit dem Merkmal:
k) Der Getriebegehäusedeckel (21) weist im Bereich seiner radial inneren Mittelöffnung einen, insbesondere axial verlaufenden, Lagerbereich (22) zur Aufnahme der mittelbaren bzw. unmittelbaren einen Lagerung des Mitnehmers (4) und einen zur Mittelöffnung anschließenden Dichtungsbereich (23) zur Aufnahme eines den Getriebegehäusedeckel (21) gegen den Mitnehmer (4) abdichtenden umlaufenden ersten Dichtrandes (7) bzw. im Bereich seiner radial äußeren Anlage gegen das Getriebegehäuse (2) einen zweiten diskreten Dichtrand (8) zur Dichtung zwischen dem Getriebegehäuse (2) und dem Getriebegehäusedeckel (21) auf.

7. Verstellantrieb nach Anspruch 6 mit dem Merkmal:
l) Der erste bzw. zweite Dichtrand (7 bzw.8) sind im bzw. am Getriebegehäusedeckel (2) formschlüssig verankert.

8. Verstellantrieb nach Anspruche 6 mit dem Merkmal:
m) Der erste bzw. zweite Dichtrand (7 bzw.8) sind mit dem Getriebegehäusedeckel (21) verklebt bzw. verspritzt.

## Claims

1. Adjusting drive, in particular a motor-vehicle adjusting drive, with the features:
a) a gear wheel (3) is rotatably mounted in a gear housing (2) which can be closed by a gear-housing cover (21),
b) the gear wheel (3) is in drive connection with a drive element (pinion 5), which is on the output side on the side of the gear-housing cover (21), by way of a carrier (4) constructed simultaneously as a drive shaft;
c) an at least tangentially elastic damping element is provided between the gear wheel (3) and the carrier (4);
d) the gear wheel (3) and the carrier (4) are constructed as separate components and by way of a separate damping element (6) are placed in tangentially stop-damped, mutual rotational synchronization;
e) the carrier (4) is rotatably mounted with a first bearing region (42) directly in the gear housing (2) and with a second bearing region (43) sealed against the gear-housing cover (21) directly by way of a concentric bearing sleeve (31) of the gear wheel (3) in the gear-housing cover (21).

2. Adjusting drive, in particular a motor-vehicle adjusting drive, with the features:
a) a gear wheel (3) is rotatably mounted in a gear housing (2) which can be closed by a gear-housing cover (21),
b) the gear wheel (3) is in drive connection with a drive element (pinion 5), which is on the output side on the side of the gear-housing cover (21), by way of a carrier (4) constructed simultaneously as drive shaft;
c) an at least tangentially elastic damping element is provided between the gear wheel (3) and the carrier (4);
f) the gear wheel (3) and the carrier (4) are connected in one piece by way of spring-web-like spokes (41) and are placed in tangentially stop-damping, mutual rotational synchronization;
g) the carrier (4) is rotatably mounted with in each case a first bearing region (42) directly in the gear housing (2) and with a second bearing region (43), sealed against the gear-housing cover (21), directly in the gear-housing cover (21).

3. Adjusting drive according to claim 1 with the feature:
h) the gear wheel (3) is axially position-secured on the side of the gear housing through abutment against a step of the carrier (4) and on the side of the gear-housing cover through abutment against the gear-housing cover (21).

4. Adjusting drive according to one of claims 1-3 with the feature:
i) the drive element (pinion 5) is a one-piece component of the carrier (4).

5. Adjusting drive according to one of claims 1-4 with the feature:
j) the carrier (4) consists of a bearing-functional material, in particular a POM-plastic (polyoxymethylene or polyacetal).

6. Adjusting drive according to one of claims 1-6 with the feature:
k) the gear-housing cover (21) has in the region of its radially inner centre opening a bearing region (22), in particular extending axially, for the incorporation of the indirect or direct bearing of the carrier (4) and a sealing region (23), connecting to the centre opening, for the incorporation of a circulating first sealing edge (7), sealing the gear-housing cover (21) against the carrier (4), and in the region of its radially outer abutment against the gear housing (2) a second discrete sealing edge (8) for the sealing between the gear housing (2) and the gear-housing cover (21).

7. Adjusting drive according to claim 6, with the feature:
l) the first and second sealing edge (7 and 8) are anchored in a form-locking manner in or on the gear-housing cover (2).

8. Adjusting drive according to claim 6, with the feature:
m) the first and second sealing edge (7 and 8) are glued or injection-moulded to the gear-housing cover (21).

## Revendications

1. Commande de déplacement, notamment commande de réglage pour véhicule automobile, présentant les caractéristiques suivantes :
a) une roue de transmission (3) est montée rotative dans un carter de transmission (2) pouvant être fermé par un couvercle (21),
b) la roue de transmission (3) est reliée, selon une liaison motrice, par l'intermédiaire d'un organe d'entraînement (4) constitué en même temps en un arbre d'entraînement, à un élément mené (pignon 5) côté sortie, du côté du couvercle (21) du carter de transmission;
c) un élément d'amortissement élastique, au moins tangentiellement est prévu entre la roue de transmission (3) et l'organe d'entraînement (4);
d) la roue de transmission (3) et l'organe d'entraînement (4) sont réalisés sous la forme d'éléments distincts et sont mis en relation d'entraînement en rotation mutuel et avec amortissement tangentiel des chocs, par l'intermédiaire d'un élément d'amortissement particulier (6);
e) l'organe d'entraînement (4) est monté rotatif, par une première partie de palier (42) directement dans le carter de transmission (2), et par une seconde partie de palier (43) étanche vis-à-vis du couvercle (21) du carter de transmission, indirectement par l'intermédiaire d'une douille de palier concentrique (31) de la roue de transmission (3), dans le couvercle (21) du carter de transmission.

2. Commande de déplacement, notamment commande de réglage pour véhicule automobile, comportant les caractéristiques suivantes :
a) une roue de transmission (3) est montée rotative dans un carter de transmission (2) pouvant être fermé par un couvercle (21),
b) la roue de transmission (3) est reliée, selon une liaison motrice, par l'intermédiaire d'un organe d'entraînement (4) constitué en même temps en un arbre d'entraînement, à un élément mené (pignon 5) côté sortie, du côté du couvercle (21) du carter de transmission;
c) un élément d'amortissement élastique au moins tangentiellement, est prévu entre la roue de transmission (3) et l'organe d'entraînement (4);
f) la roue de transmission (3) et l'organe d'entraînement (4) sont réunis d'un seul tenant par l'intermédiaire de rayons (41) en forme de barrettes élastiques et sont reliés selon une liaison d'entraînement réciproque à amortissement tangentiel des chocs;
g) l'organe d'entraînement (4) est monté rotatif, par une première partie de palier (42) directement dans le carter de transmission (2) et par une seconde partie de palier (43), étanche par rapport au couvercle (21) du carter de transmission, directement dans ce couvercle (21).

3. Commande de déplacement suivant la revendication 1, présentant la caractéristique suivante :
h) la roue de transmission (3) est bloquée axialement en position sur le carter de transmission, sous l'effet de son application contre un épaulement de l'organe d'entraînement (4), et, sur le couvercle du carter de transmission, sous l'effet de son application contre ce couvercle (21).

4. Commande de déplacement suivant l'une des revendications 1 à 3, présentant la caractéristique suivante :
i) l'élément mené (pignon 5) est un élément monobloc de l'organe d'entraînement (4).

5. Commande de déplacement suivant l'une des revendications 1 à 4, présentant la caractéristique suivante :
j) l'organe d'entraînement (4) est en un matériau apte à assumer une fonction de palier, notamment une matière plastique POM (polyoxyméthylène ou polyacétal).

6. Commande de déplacement suivant l'une des revendications 1 à 5, présentant la caractéristique suivante :
k) le couvercle (21) du carter de transmission comporte, au niveau de son ouverture centrale, intérieure du point de vue radial, une partie de palier (22), qui s'étend notamment axialement et qui sert à assurer le support direct ou indirect de l'organe d'entraînement (4), une zone d'étanchéité (23), qui se raccorde à l'ouverture centrale et qui sert à recevoir un premier rebord d'étanchéité circonférentiel (7) fermant de façon étanche le couvercle (21) du carter de transmission par rapport à l'organe d'entraînement (4), et, au niveau de son application, extérieure du point de vue radial, contre le carter de transmission (2), un deuxième rebord d'étanchéité discret (8) destiné à réaliser l'étanchéité entre le carter de transmission (2) et le couvercle (21) du carter de transmission.

7. Commande de déplacement suivant la revendication 6, présentant la caractéristique suivante :
l) les premier et deuxième rebords d'étanchéité (7 et 8) sont ancrés, selon une liaison par forme complémentaire, dans ou sur le couvercle (2) du carter de transmission.

8. Commande de déplacement suivant la revendication 6, présentant la caractéristique suivante :
m) les premier et deuxième rebords d'étanchéité (7 et 8) sont collés ou moulés par injection sur le couvercle (21) du carter de transmission.
